# EUROPÄISCHE PATENTSCHRIFT

(11) **EP 0 520 148 B1**
(45) Veröffentlichungstag und Bekanntmachung des Hinweises auf die Patenterteilung: **11.03.1998**
(21) Anmeldenummer: 92105743.6
(22) Anmeldetag: 03.04.1992
(51) Int. Cl.: B60G 17/056

(54) **Pneumatisches Schaltventil für Anlagen zum Heben und Senken des Fahrzeugaufbaus von luftgefederten Fahrzeugen**
Pneumatic switching valve for body lifting and lowering systems for vehicles with pneumatic suspension
Soupape pneumatique de commutation pour dispositfs de soulèvement ou d'abaissement de la carrosserie de véhicules à suspension pneumatique

(30) Priorität: 24.06.1991 DE 4120824
(43) Veröffentlichungstag der Anmeldung: 30.12.1992
(73) Patentinhaber: GRAU GMBH, D-69123 Heidelberg (DE)
(72) Erfinder: Sulzyc, J., W-6904 Eppelheim (DE); Blanz, R., W-6901 Heiligkreuzsteinach (DE)
(74) Vertreter: Rehberg, Elmar, Dipl.-Ing.

(56) Entgegenhaltungen:
- WO-A-91/06440
- WO-A-91/07291
- DE-A- 2 510 954
- DE-B- 2 028 139
- DE-C- 2 623 235
- FR-A- 2 255 194

## Beschreibung

Die Erfindung bezieht sich auf ein pneumatisches Schaltventil für Anlagen zum Heben und Senken des Fahrzeugaufbaus von luftgefederten Fahrzeugen mit den im Oberbegriff des Anspruchs 1 angegebenen Merkmalen. Solche Schaltventile, auch manchmal Wechselladeventile genannt, werden in Anlagen zum willkürlichen Heben und Senken des Fahrzeugaufbaus zusammen mit mindestens einem Niveauregelventil eingesetzt, wobei das Niveauregelventil die Aufgabe hat, zuladungsabhängig den Druck in den Luftfederbälgen zu regeln. Das pneumatische Schaltventil wird im Containerbetrieb betätigt, um eine Last aufzunehmen, den Fahrzeugaufbau an die Höhe einer Beladungsrampe anzupassen u. dgl. Die vorliegende Erfindung bezieht sich auf ein mechanisch steuerbares, pneumatisches Schaltventil, also ein Schaltventil, welches manuell durch mindestens ein Bedienungselement in die verschiedenen Stellungen überführt werden kann.

Ein pneumatisches Schaltventil mit den im Oberbegriff des Anspruches 1 angegebenen Merkmalen ist aus der FR-A-22 55 194 bekannt. Das Schaltventil besitzt ein Gehäuse, aus welchem ein Bedienungselement in Form eines Hebels herausragt, wobei der Hebel im Zusammenhang mit einer Kulissenführung am Gehäuse in verschiedene Stellungen gebracht werden kann, die durch eine Hülse und eine Feder im Bedienungshebel teilweise gegeneinander verriegelt sind. So ist ein Wechsel zwischen den Stellungen Stop und Fahrt nur durch eine manuelle Betätigung des Hebels vermittels eines gezielten Ziehvorganges möglich. Im Gehäuse des Schaltventils ist eine Federanordnung vorgesehen, die in Verbindung mit einer Exzenteranordnung an einer Schaltwelle nach dem Loslassen des Bedienungselementes aus der Stellung Heben oder Senken heraus eine Rückführung des Bedienungselementes in eine dem geschlossenen Einlaßventil und dem geschlossenen Auslaßventil entsprechende Stellung (Stop) ermöglicht. Die Stellung Fahrt ist auf automatischem Wege nicht erreichbar. Wird die manuelle Einstellung der Stellung Fahrt vergessen, dann findet die Fahrt mit einer Fahrgestellhöhe über den Achsen statt, für die das Fahrzeug nicht bestimmt ist.

Aus der WO-A-91/06440 ist eine Schaltventilanordnung mit einem pneumatischen Schaltventil einerseits und einem von Hand betätigbaren weiteren Ventil sowie zwei Niveauregelventilen und vier pneumatisch ansteuerbaren Ventilen bekannt. Das pneumatische Schaltventil weist fünf Stellungen auf und kann ausschließlich manuell betätigt werden. Ein Loslassen des Bedienungselementes des Schaltventils in einer der fünf einstellbaren Stellungen führt dazu, daß die betreffende Stellung beibehalten wird. Eine Rückführanordnung für eine bevorzugte Stellung des Schaltventiles ist nicht vorgesehen. Das zusätzlich vorgesehene, von Hand betätigbare Ventil besitzt einerseits ein Bedienungselement für die Handbetätigung und andererseits eine Steuerkammer, die in Abhängigkeit von der Einleitung eines Bremsvorganges beaufschlagt wird und dann zu einer Rückführung des Bedienungselementes dieses Ventils in die andere mögliche Stellung führt. Diese andere Stellung ändert an den Stellungen des Schaltventils nichts, sondern sorgt gleichsam durch eine Umgehung des Schaltventils dafür, daß mit Hilfe weiterer Ventile über die Niveauregelventile die Luftfederbälge mit Druckluft entsprechend versorgt werden. Dies geschieht jedoch nur, wenn auch die Bremse betätigt wird. Dies bedeutet, daß bei einer Fahrt die zuvor eingestellte Höhenlage des Fahrgestells so lange beibehalten bleibt und damit nicht der Stellung Fahrt entspricht, bis die erste Bremsbetätigung erfolgt. Diese bekannte Schaltanordnung ist auch insofern gefährlich, als ein z. B. in der Stellung Heben verbliebenes Schaltventil sofort das Fahrgestell nach einem Fahrvorgang anhebt, sobald das von Hand betätigbare Ventil in seine eine Stellung überführt wird, wodurch im allgemeinen gar kein Hebevorgang ausgelöst werden soll.

Ein weiteres pneumatisches Schaltventil ist aus der DE-PS 26 23 235 bekannt. Die manuell betätigbare Steuereinrichtung weist ein mechanisches Bedienungselement auf, welches aus einer Schaltwelle und einem Bedienungshebel zusammengesetzt ist. Über den Bedienungshebel kann die Schaltwelle in 5 verschiedene Winkellagen um ihre Achse verschwenkt werden, wobei die Stellung Stop zweimal vorgesehen ist, und zwar jeweils einmal zwischen Fahrt und Heben und einmal zwischen Fahrt und Senken. Auf der Schaltwelle sind Nockenscheiben angebracht, die für jeden Luftfederkreis ein Einlaßventil, ein Auslaßventil und ein Sperrventil betätigen. Diese drei Ventile sind in einem scheibenartigen Gehäusekörper untergebracht, so daß das Ventil in einfacher Weise auch für zwei oder mehrere Luftfederkreise aufgebaut und erweitert werden kann. Die Schaltwelle und der mit ihr drehfest verbundene Betätigungshebel ist in den 5 Stellungen jeweils verrastet und die Stellung Fahrt ist durch eine besondere Rasteinrichtung mit Sicherungsfeder zusätzlich gesichert. Damit wird erreicht, daß jeder Schaltschritt nur bewußt manuell durchgeführt werden kann und beispielsweise die Stellung Heben nur dadurch verlassen werden kann, daß bewußt eine Verschwenkung des Bedienungselements in die Stellung Stop erfolgt. Ein Loslassen des Bedienungselements in der Stellung Heben genügt also nicht, um den Hebevorgang zu beenden. Dieses bekannte Schaltventil erfordert eine zuverlässige Betätigung. Es muß nach Beendigung des Containerbetriebs von Hand in die Stellung Fahrt zurückgeführt und entsprechend verriegelt werden, wenn die ordnungsgemäße Funktion des Niveauregelventils während der Fahrt möglich sein soll. Vorteilhaft ist an diesem Schaltventil, daß nur ein Bedienungselement vorgesehen ist, um sämtliche Stellungen zu erreichen.

Ein anderes pneumatisches Schaltventil ist aus der DE-OS 25 10 954 bekannt. Hier sind zwei Bedienungselemente vorgesehen. Das eine Bedienungselement besteht aus einem manuell verschwenkbaren Hebel, der aus einer Neutralstellung in die Stellung Senken oder die Stellungen Heben verschwenkt werden kann. Das zugehörige Ventilelement, Welches das Einlaßventil und das Auslaßventil betätigt, wird von einer Federanordnung in der Neutralstellung gehalten und kann über das Bedienungselement unter Überwindung einer Federkraft in die Stellung Heben oder Senken verschoben werden. Ob die Federn so stark dimensioniert sind, daß sie ein selbsttätiges Rückverschwenken aus der Stellung Senken oder Heben in die mittlere Neutralstellung gestatten, ist nicht erkennbar. Für die Stellungen Fahrt und Stop ist ein weiteres Betätigungselement vorgesehen, welches eine Schaltwelle aufweist, die über einen pneumatisch beaufschlagbaren Steuerkolben verschwenkbar ist. Der zugehörige Ventilkörper ist als Schieber ausgebildet und auf einer Rückführfeder abgestützt, die den Ventilschieber und die Schaltwelle in die Stellung Stop zurückführen, wenn über ein im Fahrerhaus angeordnetes Steuerventil die Steuerkammer des Steuerkolbens entlüftet ist. Während der Fahrt wird das Steuerventil in eine solche Stellung gebracht, daß Druckluft auf dem Steuerkolben steht und die Stellung Fahrt über die Schaltwelle damit verriegelt ist. Soll nach Beendigung der Fahrt ein Containerbetrieb ermöglicht werden, wird das Steuerventil umgeschaltet und die Steuerkammer entlüftet. Dieses bekannte Schaltventil besitzt somit ein erstes, mechanisch betätigbares Bedienungselement für den Containerladebetrieb und ein zweites, pneumatisch steuerbares Betätigungselement infolge des Steuerkolbens und der Schaltwelle. Es weist infolge der Rückführfeder den Nachteil auf, daß bei einem Ausfall von Steuerluft während der Fahrt die Stellung Fahrt verlassen und die Stellung Stop eingenommen wird, so daß die Nachregelung des Drucks in den Luftfederbälgen während der Fahrt unterbleibt. Wird nach einem Containerbetrieb die Umsteuerung des Steuerventils, welches im Fahrerhaus angeordnet ist, vergessen, so kann das Niveauregelventil selbst bei völlig intakter Druckluftanlage seine regelnde Funktion während der Fahrt ebenfalls nicht erfüllen.

Der Erfindung liegt die Aufgabe zugrunde, ein pneumatisches Schaltventil der eingangs beschriebenen Art derart weiterzubilden, daß für den Containerbetrieb eine Totmannsfunktion erreicht wird und andererseits bei Fahrt verläßlich die Stellung Fahrt am Schaltventil erreicht wird.

Erfindungsgemäß wird dies bei dem pneumatischen Schaltventil der eingangs beschriebenen Art dadurch erreicht, daß im Gehäuse des Schaltventils ein Steuerkolben vorgesehen ist, dessen Steuerkammer bei Fahrt mit Druckluft beaufschlagbar ist und damit das Bedienungselement oder ein weiteres Bedienungselement des Schaltventils automatisch von der Stellung Stop in die Stellung Fahrt überführt und/oder in der Stellung Fahrt belastet.

Es wird eine Federanordnung zum Rückführen des Bedienungselements nach dem Loslassen vorgeschlagen, wobei die Feder so anzuordnen und zu dimensionieren ist, daß sie eine Totmannsfunktion erfüllt. Damit soll nach dem Containerbetrieb aus der Stellung Heben oder Senken heraus durch einfaches Loslassen des Bedienungselements eine Zwischenstellung eingenommen werden, in der sowohl das Einlaßventil wie auch das Auslaßventil geschlossen ist. Damit ist es einerseits möglich, die Stellung Heben oder Senken bewußt durch entsprechende Betätigung des Bedienungselements zu verlassen und den Containerbetrieb zu beenden. Andererseits führt ein unbeabsichtigtes Abrutschen von dem Bedienungselement ebenfalls dazu, daß der Hebe- oder Senkvorgang sofort beendet und die neutrale Zwischenstellung eingenommen wird. Andererseits ist im Gehäuse ein Steuerkolben vorgesehen, über welchen das Bedienungselement oder ein weiteres Bedienungselement automatisch aus der Stellung Stop in die Stellung Fahrt überführt wird, wenn eine manuelle Überführung des betreffenden Bedienungselements in die Stellung Fahrt vergessen wurde. Auch die manuelle Betätigung ist natürlich möglich, so daß in einem solchen Fall die Druckluft auf den Steuerkolben nur dazu führt, daß das Bedienungselement, welches sich bereits in der Stellung Fahrt befindet, diesbezüglich belastet wird. Die Einwirkung der Druckluft auf den Steuerkolben kann auf zwei verschiedene Arten erfolgen. Zum ersten ist eine dauernde Einwirkung von Druckluft während der gesamten Fahrt möglich. Zu diesem Zweck wird ein die Fahrt des Fahrzeugs wiedergebendes Signal derart benutzt, um Druckluft aus der Druckluftbeschaffungsanlage des Fahrzeugs - solange die Fahrt des Fahrzeugs andauert - auf den Steuerkolben zu schicken. Damit kann auch eine Verriegelung der Fahrtstellung erfolgen, so daß ein Containerbetrieb während der Fahrt nicht möglich ist. Hierbei wird zweckmäßig das Bedienungselement, welches die beiden Stellungen Fahrt und Stop herbeizuführen gestattet, von einer Rückführfeder belastet, damit nach Beendigung der Fahrt und Wegfall der Drucklufteinwirkung automatisch die Stellung Stop erreicht wird, aus der heraus Containerbetrieb möglich ist.

Eine andere Möglichkeit der Druckeinwirkung ist durch Anwendung bzw. Ausnutzung eines Druckluftimpulses, also unter kurzzeitiger Einwirkung der Druckluft, möglich. So kann die Steuerkammer bei Fahrt mit einem Druckluftimpuls kurzzeitig beaufschlagbar sein und das der Stellung Fahrt zugeordnete Bedienungselement ist ohne Rückführfeder vorgesehen und verbleibt nach einem Druckluftimpuls in der Stellung Fahrt, solange die Fahrt des Fahrzeugs andauert. Das Bedienungselement verbleibt auch während des anschließenden Stillstands des Fahrzeugs in der Stellung Fahrt, solange es nicht manuell in die Stellung Stop überführt wird, was zur Einleitung eines Containerbetriebs erforderlich ist.

Es kann nur ein Bedienungselement für die Stellungen Heben, Senken, Fahrt und Stop vorgesehen sein, welches eine verschiebbare und drehbare Schaltwelle aufweist, wobei die Verschiebung den Stellungen Fahrt und Stop und die Drehung den Stellungen Heben und Senken zugeordnet ist. Dabei sind die verschiedenen Stellungen so verteilt, daß eine sinngemäße Betätigung möglich ist. Nach Beendigung des Containerbetriebs kann die Stellung Fahrt nur aus der Stellung Stop heraus eingenommen werden, wobei zunächst die Totmannsfunktion erforderlich ist und dann das Bedienungselement aus der Stellung Stop in die Stellung Fahrt durch Einwirkung von Druckluft überführt wird.

Es kann eine Verriegelungseinrichtung vorgesehen sein, die in der Stellung Fahrt eine Drehung der Schaltwelle verhindert und nur aus der Stellung Stop heraus ermöglicht. Dies schränkt einen unsinnigen Druckluftverbrauch ein, indem einerseits die Neutralstellung des Einlaß- und des Auslaßventils gesichert sind und damit während der Fahrt kein versehentlicher Containerbetrieb möglich ist. Im einzelnen kann die Verriegelungseinrichtung einen die Schaltwelle radial durchsetzenden Bolzen aufweisen, der in der Stellung Fahrt zwischen Anschlägen gegen Verdrehen gesichert ist. In der Stellung Stop wirken diese Anschläge auf den Bolzen nicht ein, so daß die Verdrehbewegung nach beiden Seiten möglich ist.

Die Federanordnung kann eine auf die Schaltwelle einwirkende Schenkelfeder aufweisen. Es sei ausdrücklich darauf hingewiesen, daß die Schenkelfeder auf das Bedienungselement oder ein Teil desselben einwirkt und nicht etwa dazu dient, Teile des Einlaß- oder Auslaßventils in Anlage an einem Bedienungselement zu halten o. dgl.

Statt der Verwendung eines für sämtliche Stellungen ausgebildeten Bedienungselements sind auch Ausführungsformen denkbar, bei denen zwei Bedienungselemente vorgesehen sind. Dabei ist ein erstes Bedienungselement für die Stellungen Stop und Fahrt und ein zweites Bedienungselement für die Stellungen Heben und Senken vorgesehen; beide Bedienungselemente können als Schiebeelemente ausgebildet sein. Sie besitzen jeweils zwei wesentliche Stellungen, die ihren Endlagen entsprechen. Das eine Bedienungselement kann zusätzlich eine Zwischenstellung als Neutralstellung aufweisen, in welcher sowohl das Einlaßventil wie auch das Auslaßventil geschlossen ist.

Das zweite Bedienungselement weist dabei die Federanordnung zum Rückführen nach dem Loslassen auf und die Federanordnung besitzt zwei Federn, die einen Doppelventilkörper einmal gegenüber dem Gehäuse und zum anderen gegenüber dem Bedienungselement abstützen. Diese beiden Federn sind so ausgebildet und dimensioniert, daß sie nicht nur die Neutralstellung belasten, sondern in der Lage sind, automatisch, d. h. selbsttätig, nach dem Loslassen des Bedienungselements dieses entsprechend der Neutralstellung zurückzuführen.

In der Zuleitung zu der Steuerkammer kann ein Wechselventil vorgesehen sein, das einen Anschluß für eine Bremsleitung und einen weiteren Anschluß für eine Druckimpulsleitung aufweist. Die Anordnung eines Wechselventils ist unabhängig davon, ob ein oder zwei Bedienungselemente an dem Schaltventil verwirklicht werden. Ein solches Wechselventil besitzt üblicherweise zwei wahlweise zu benutzende Eingänge und einen Ausgang, so daß je nach der Stellung seines Ventilkörpers das eine oder andere Signal über den Ausgang zu dem nachgeschalteten Element weitergeleitet wird. Damit ist es ohne Weiteres möglich, z. B. an dem einen Eingang des Wechselventils die Bremsleitung anzuschließen oder eine mit dieser jedenfalls in Verbindung stehende Leitung, während am anderen Eingang ein Signal in Form von Druckluft zugeleitet wird, welches in Abhängigkeit von einer die Fahrt des Fahrzeugs anzeigenden Größe abgeleitet wird. Insbesondere bei Fahrzeugen mit Antiblockierregelung sind Sensoren gebräuchlich, die die Radbewegungen überwachen. Aus solchen Anlagen läßt sich sehr einfach ein die Fahrt des Fahrzeugs wiedergebendes Signal gewinnen und ableiten.

Dem weiteren Anschluß des Wechselventils kann ein Magnetventil vorgeschaltet sein, welches einen Auslaß aufweist und über eine Verbindungsleitung an einen Druckluftvorrat angeschlossen ist. Damit ist es möglich, das die Fahrt des Fahrzeugs wiedergebende Signal elektrisch zu erstellen, zu verarbeiten und weiterzuleiten und die Umwandlung in eine pneumatische Größe erst am bzw. im Gehäuse des Schaltventils durchzuführen.

Das erfindungsgemäße Schaltventil wird anhand bevorzugter Ausführungsformen weiter erläutert und beschrieben. Es zeigen:
- Figur 1: eine Schnittdarstellung einer ersten Ausführungsform des Schaltventils mit einem einzigen Bedienungselement,
- Figur 2: eine Schnittansicht zur Verdeutlichung der Federanordnung des Schaltventils gemäß Figur 1 und
- Figur 3: eine Schnittdarstellung eines zweiten Ausführungsform des Schaltventils.

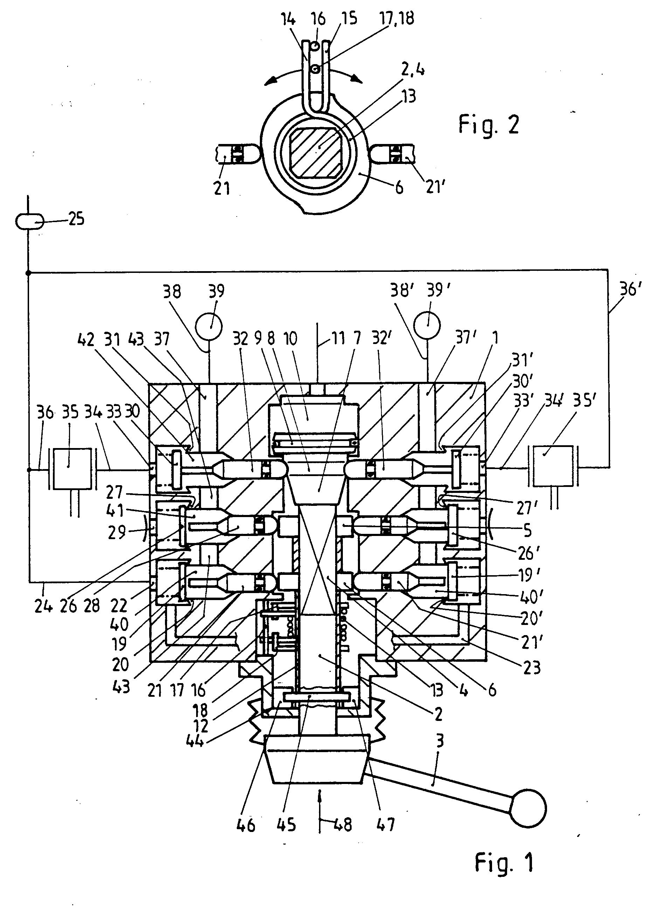

Das in Figur 1 dargestellte Schaltventil weist ein zweckmäßig mehrteiliges Gehäuse 1 auf, in welchem eine Schaltwelle 2 verschiebbar und drehbar gelagert ist. Die Schaltwelle 2 kann durch einen etwa radial abstehenden Bedienungshebel 3 ergänzt sein. Die Schaltwelle 2 ist damit auf jeden Fall Bestandteil eines manuell betätigbaren Bedienungselements zum Herbeiführen der verschiedenen Stellungen des Schaltventils.

Die Schaltwelle 2 besitzt über eine wesentliche Länge ihrer Erstreckung einen Schaft 4 mit unrundem Querschnitt, auf dem zwei Nockenscheiben 5 und 6 gleitend gelagert sind. Mit anderen Worten kann die Schaltwelle 2 zu den axial stillstehenden Nockenscheiben 5 und 6 relativ verschoben werden, ohne daß die verdrehgesicherte Verbindung zwischen den Teilen verlorengeht. An den Schaft 4 schließt sich ein konischer Körper 7 an, der eine umlaufende Rille 8 trägt. Die Schaltwelle 2 endet in einem Steuerkolben 9, der auch als separates Teil mit der Schaltwelle 2 verbunden sein kann. Im Gehäuse 1 ist eine zugehörige Steuerkammer 10 gebildet, die in dauernder Verbindung zu einer Leitung 11 steht, über die Druckluft, auch als Druckluftimpuls, herangeleitet werden kann.

Mit der Schaltwelle 2 ist eine Hülse 12 drehfest verbunden, auf der ebenfalls drehfest eine als Schenkelfeder ausgebildete Federanordnung 13 gelagert ist. Die beiden freien Enden 14 und 15 der Federanordnung 13 arbeiten einerseits mit einem gehäuseseitig gelagerten Stift 16 und andererseits mit Armen 17 bzw. 18 zusammen, die drehfest mit der Schaltwelle 2 verbunden sind. Wie insbesondere Figur 2 erkennen läßt, kann die Schaltwelle 2 nach beiden Richtungen gemäß den angegebenen Pfeilen verdreht werden, wobei die Federanordnung 13 eine entsprechend gerichtete Rückstellkraft aufweist, die ausreicht, um die Schaltwelle 2 nach dem Loslassen des Bedienungshebels 3 in die mittlere Neutralstellung gemäß Figur 2 zurückzuführen.

Figur 1 zeigt die Relativlage der Teile in der Stellung Fahrt. Das Schaltventil ist für zwei Luftfederkreise ausgebildet, so daß entsprechende Teile doppelt vorgesehen sind. Diese Teile werden für einen Kreis nachfolgend beschrieben. Für den anderen Kreis ergeben sich entsprechende Bezugszeichen, die einmal mit einem Strich versehen sind. So ist am Gehäuse 1 ein Ventilkörper 19 federnd aufgehängt, der mit einem Rand 20 am Gehäuse 1 ein Einlaßventil 19, 20 bildet. Hierzu gehört ein Stößel 21, der mit dem Umfang der Nockenscheibe 6 zusammenarbeitet. Über einen Anschluß 22 bzw. eine Umgehungsleitung 23 wird aus einer Leitung 24 Druckluft aus einem Druckluftbehälter 25 herangeführt, die vor den geschlossenen Einlaßventilen 19, 20 und 19', 20' der beiden Kreise steht.

Ein Ventilkörper 26 und ein eingezogener Rand 27 am Gehäuse bilden ein Auslaßventil 26, 27 für den einen Luftfederkreis. Hierzu gehört ein Stößel 28 und eine Entlüftungsöffnung 29 am Gehäuse 1. Der Stößel 28 arbeitet mit der Nockenscheibe 5 zusammen.

Ein Ventilkörper 30 und ein Rand 31 bilden schließlich ein Sperrventil 30, 31, dem ein Stößel 32 zugeordnet ist, der mit der Rille 8 des konischen Körpers 7 zusammenarbeitet. An einem Anschluß 33 ist eine Leitung 34 angeschlossen, die von einem Niveauregelventil 35 herangeführt ist, welches andererseits über eine Leitung 36 mit Druckluft versorgt wird. An einem Anschluß 37 ist eine Leitung 38 angeschlossen, die zu einem Luftfederbalg 39 führt. An die Leitung 38 können auch mehrere Luftfederbälge desselben Luftfederkreises angeschlossen sein.

Das Einlaßventil 19, 20 weist eine Ventilkammer 40 auf. Das Auslaßventii 26, 27 besitzt eine Ventilkammer 41 und das Sperrventil 30, 31 ist mit einer Ventilkammer 42 versehen. Eine Leitung 43 verbindet die Ventilkammern 40, 41 und 42 miteinander und steht in dauernder Verbindung zu dem Anschluß 37 bzw. der zum Luftfederbalg 39 führenden Leitung 38.

Es versteht sich, daß auf die dargestellte und beschriebene Weise ein für zwei Luftfederkreise ausgebildetes Schaltventil vorgesehen ist. In jeder Ebene lassen sich jedoch auch mehrere der Ventile anordnen, so daß das Schaltventil in einfacher Weise auf drei Luftfederkreise erweiterbar oder auf einen Luftfederkreis zurückführbar ausgebildet sein kann.

Die Schaltwelle 2 besitzt eine Verriegelungseinrichtung 44, die ein axiales Verschieben der Schaltwelle 2 nicht behindert, jedoch in der Stellung Fahrt eine Verdrehung der Schaltwelle 2 unmöglich macht. Zu diesem Zweck ist die Schaltwelle 2 von einem Bolzen 45 radial durchsetzt, der mit Anschlägen 46 und 47 zusammenarbeitet, die gehäuseseitig angeordnet sind. Der Bolzen 45 kann gleichzeitig auch die drehsichere Verbindung der Hülse 12 zu der Schaltwelle 2 herstellen.

In Figur 1 ist die Stellung Fahrt dargestellt. Eine Verdrehung der Schaltwelle 2 ist nicht möglich. Es ist lediglich möglich, die Schaltwelle 2 in Richtung des Pfeils 48 axial zu verschieben, so daß die Rille 8 die Stößel 32 und 32' freigibt, so daß die Sperrventile 30, 31 und 30', 31' schließen. Damit wird die Verbindung zwischen dem Niveauregelventil 35 und dem Luftfederbalg 39 unterbrochen. Während des Verschiebens der Schaltwelle 2 in die Stellung Stop verbleibt die Federanordnung 13 und die Nockenscheiben 5 und 6 in ihrer relativen Stellung zum Gehäuse 1 unverändert. Lediglich der Steuerkolben 9 wird in die Steuerkammer 10 hinein verschoben, was möglich ist, da zu diesem Zeitpunkt kein Druck und kein Druckimpuls über die Leitung 11 ansteht. Die Schaltwelle 2 verbleibt damit in der Stellung Stop und aus dieser Stellung heraus ist eine Drehbewegung, wie sie für den Containerbetrieb erforderlich ist, möglich. Je nach der Drehrichtung und der Ausbildung der Nockenscheiben 5 und 6 wird entweder das Einlaßventil 19, 20 geöffnet und das Auslaßventil 26, 27 bleibt geschlossen (Heben) oder das Auslaßventil 26, 27 wird geöffnet und das Einlaßventil 19, 20 bleibt geschlossen (Senken). Der jeweilige Hebe- oder Senkvorgang kann dadurch beendet werden, daß die Schaltwelle 2 über den Bedienungshebel 3 wiederum in ihre Neutralstellung gemäß Figur 2 zurückgedreht wird. Aber auch ein einfaches Loslassen des Bedienungshebels 3 reicht aus, da die Federanordnung 13 in der verdrehten Stellung eine solche Rückstellkraft aufbringt, daß selbsttätig die Neutralstellung erreicht wird. Zu diesem Zweck kann die Federanordnung 13 mit einer entsprechend großen Vorspannkraft ausgestattet und eingebaut sein.

Aus der Neutralstellung zwischen den beiden möglichen Verdrehungen, die hier mit der Stellung Stop zusammenfällt, kann die Schaltwelle 5 durch Herausziehen aus dem Gehäuse 1, also nur durch eine Axialverschiebung, in die Stellung Fahrt überführt werden, wobei die Rille 8 die Stößel 32 und 32' unter einem gewissen Schnappeffekt aufnimmt und dadurch diese Stellung sichert. Wird dann die Fahrt des Fahrzeugs begonnen, dann wird auf irgendeine Weise ein von der Fahrt abhängiges Signal gebildet und über die Leitung 11 Druckluft oder auch nur ein Druckluftimpuls in die Steuerkammer 10 geschickt, so daR der Steuerkolben 9 kraftmäßig in der Stellung Fahrt, in der er sich durch die manuelle Verstellung bereits befand, belastet wird.

Wurde es dagegen am Ende des Containerbetriebs verabsäumt, die Schaltwelle 2 aus der Stellung Stop in die Stellung Fahrt zu überführen, so reicht der über die Leitung 11 anstehende Druck oder der Druckimpuls aus, um die Axialverschiebung der Schaltwelle 2 zu bewirken, bis auch hier die Stößel 32 und 32' in der Rille 8 einschnappen. Auch nach einem Verschwinden des Druckimpulses über die Leitung 11 verbleibt damit die Schaltwelle 2 in der Stellung Fahrt. Die Niveauregelventile 35 und 35' können damit ihre ordnungsgemäße Funktion erfüllen.

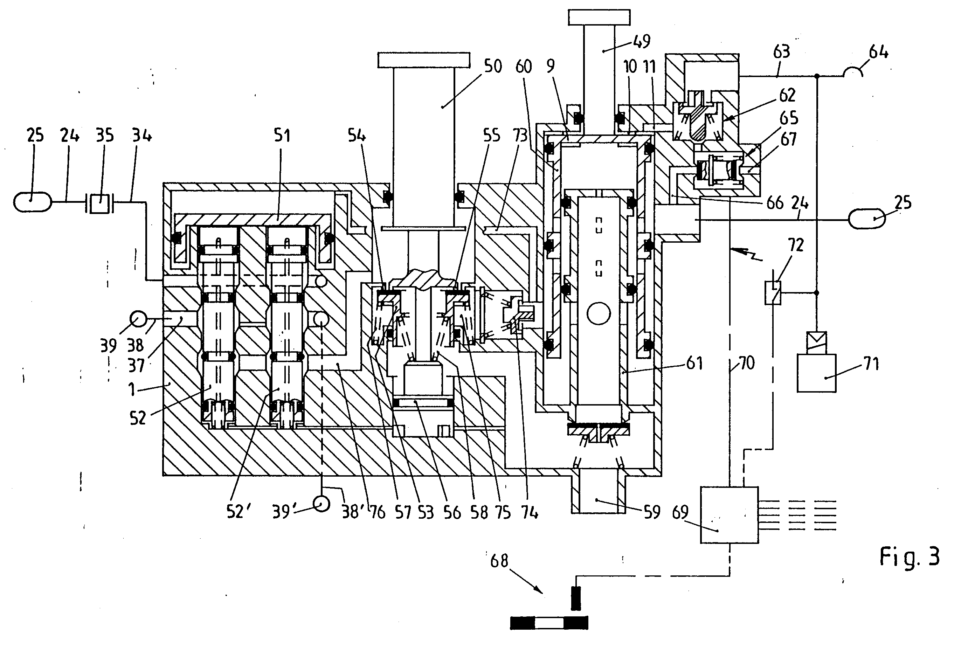

Figur 3 zeigt eine zweite Ausführungsform des pneumatischen Schaltventils, bei dem jedoch im Gegensatz zu der Ausführungsform der Figuren 1 und 2 in einem Gehäuse 1 zwei Bedienungselemente vorgesehen sind. Ein erstes Bedienungselement 49 ist den Stellungen Fahrt und Stop zugeordnet. Ein zusätzliches Bedienungselement 50 ist den Stellungen Heben und Senken zugeordnet und besitzt darüberhinaus eine neutrale Mittelstellung. Auch dieses Schaltventil ist für zwei Luftfederkreise ausgebildet, wobei der Luftfederbalg 39 dem einen Luftfederkreis und der Luftfederbalg 39' dem anderen Luftfederkreis zugeordnet ist. Ein Betätigungskolben 51 bestätigt zwei Schieber 52 und 52', die in Verbindung mit einer entsprechenden Gehäuseausbildung und Anschlüssen die Funktion der Sperrventile 30, 31 und 30', 31' der Ausführungsform der Figuren 1 und 2 erfüllen.

Im mittleren Bereich des Gehäuses ist dem Betätigungselement 50 zugeordnet ein Doppelventilkörper 53 vorgesehen, der mit einem Rand 54 ein Einlaßventil 53, 54 und mit einem Kragen 55 am Betätigungselement 50 ein Auslaßventil 53, 55 bildet. Das Betätigungselement 50 endet in einem Ausgleichskolben 56. Der Doppelventilkörper 53 ist über eine Feder 57 gehäuseseitig und über eine Feder 58 an dem Betätigungselement 50 abgestützt. Die Federn 57 und 58 erfüllen die Funktion der Federanordnung 13 der Ausführungsform gemäß Figur 1, d. h. sie schieben das Betätigungselement 50 nach Beendigung des Containerbetriebs aus der Stellung Heben oder der Stellung Senken in die Neutralstellung zurück. Der Doppelventilkörper 53 ist hohl ausgebildet, so daß er an dieser Stelle Verbindung zu einer Entlüftungsöffnung 59 am Gehäuse 1 hat.

Das erste Betätigungselement 49 weist einen hülsenartigen Schieber 60 auf, der mit Hilfe der dargestellten Dichtungen im Gehäuse dichtend und gleitend bewegbar ist. Er arbeitet mit einem am Gehäuse 1 ortsfest angeordneten Rohr 61 zusammen, wobei auch hier die entsprechenden Durchbrechungen und Dichtungen, wie dargestellt, vorgesehen sind. Der Schieber 60 bildet mit einem geschlossenen Boden den Steuerkolben 9, der an die Steuerkammer 10 anschließt. Die Leitung 11 führt auch hier zur Steuerkammer 10. Der Leitung 11 vorgeschaltet ist ein Wechselventil 62, dessen einer Eingang an eine Bremsleitung 63 oder eine Leitung ähnlicher Funktion angeschlossen ist. Das Schaltventil ist hier in einer Anlage eines Anhängers dargestellt, was durch einen Kupplungskopf 64 verdeutlicht wird. Am anderen Anschluß des Wechselventils 62 ist ein Magnetventil 65 vorgesehen, an welchem über eine Leitung 66 Druckluft aus dem Druckluftvorratsbehälter 25 über die Leitung 24 ansteht. Das Magnetventil 65 besitzt eine eigene Entlüftungsöffnung 67.

Die zu dem Schaltventil gehörende Anlage kann beispielsweise mit einem Radsensor 68 und einer nachgeschalteten Steuer- und Verarbeitungseinrichtung 69 versehen sein, die Bestandteile einer Antiblockieranlage sind. Aus dem Signal des Radsensors 68 und mit Hilfe der Steuereinrichtung 69 läßt sich sehr einfach ein elektrisches Signal, welches den Fahrzustand wiedergibt, gewinnen und über eine elektrische Leitung 70 das Magnetventil 65 ansteuern. Dies kann auch im Sinn eines Steuerimpulses verlaufen, so daß zu Beginn einer Fahrt sehr schnell ein Steuerimpuls über die Leitung 70 auf das Magnetventil 65 gegeben wird, so daß dies seinen Eingang öffnet und seinen Ausgang schließt, so daß kurzzeitig die Steuerkammer 10 mit einem Druckimpuls belastet wird, die ausreicht, um das Betätigungselement 49 aus der dargestellten Stellung Stop in die andere Stellung Fahrt zu verschieben und in dieser verschobenen Stellung zu belassen. Es ist natürlich auch möglich, ein über die Bremsleitung 63 erfolgendes Signal dazu auszunutzen, um die Umschaltung des Betätigungselements 49 zu erreichen. Eine weitere Möglichkeit besteht darin, ein in der Bremsleitung 63 auftretendes Bremssignal, welches auch zu einem Antiblockierventil 71 geschickt wird, über einen Bremslichtschalter 72 abzugreifen und über die Steuereinrichtung 69 so auszuwerten, daß in Abhängigkeit hiervon über die elektrische Leitung 70 ein entsprechendes Signal auf das Magnetventil 65 geschickt wird. Es gibt hier verschiedene Möglichkeiten der Signalgewinnung und Weiterleitung. Entscheidend und gemeinsam ist all diesen Möglichkeiten, daß es sich um ein Signal handeln muß, welches dann auftritt, wenn das Fahrzeug fährt und welches in der Lage ist, das Betätigungselement 49 aus der Stellung Stop in die Stellung Fahrt zu überführen oder, falls die Überführung manuell bereits stattgefunden hat, die Stellung Fahrt nicht zu verändern.

Man erkennt an Figur 3 auch, daß das Betätigungselement 49 in der dargestellten Stellung Stop die Druckluftverbindung zwischen dem Druckluftvorratsbehälter 25 über eine Leitung 73 auf den Betätigungselement 51 weiterleitet, so daß die beiden Sperrventile geschlossen sind und die Niveauregelventile 35 damit abgeschlossen sind. Andererseits steht Druckluft aus dem Druckluftvorratsbehälter 25 über ein Rückschlagventil 74 vor einer Vorratskammer 75 vor dem geschlossenen Einlaßventil 53, 54 an, so daß durch Hineindrücken des zweiten Betätigungselements 50 das Einlaßventil geöffnet wird und die Luftfederbälge 39 belüftet werden können. Durch Herausziehen des Betätigungselements 50 wird das Auslaßventil 53, 55 geöffnet und über die Leitung 76 können die Luftfederbälge 39 und 39' im Sinn des Senkens des Fahrzeugaufbaus entlüftet werden. Nach Beendigung des Senkvorgangs kann das Betätigungselement 50 entweder in die Neutralstellung, in der das Einlaßventil und das Auslaßventil geschlossen ist, zurückgezogen werden oder die Federanordnung 57, 58 führt diese Neutralstellung selbsttätig herbei.

### Bezugszeichenliste:

- 1: = Gehäuse
- 2: = Schaltventil
- 3: = Bedienungshebel
- 4: = Schaft
- 5: = Nockenscheibe
- 6: = Nockenscheibe
- 7: = konischer Körper
- 8: = Rille
- 9: = Steuerkolben
- 10: = Steuerkammer
- 11: = Leitung
- 12: = Hülse
- 13: = Federanordnung
- 14: = Ende
- 15: = Ende
- 16: = Stift
- 17: = Arm
- 18: = Arm
- 19: = Ventilkörper
- 20: = Rand
- 21: = Stößel
- 22: = Anschluß
- 23: = Umgehungsleitung
- 24: = Leitung
- 25: = Druckluftvorratsbehälter
- 26: = Ventilkörper
- 27: = Rand
- 28: = Stößel
- 29: = Entlüftungsöffnung
- 30: = Ventilkörper
- 31: = Rand
- 32: = Stößel
- 33: = Anschluß
- 34: = Leitung
- 35: = Niveauregelventil
- 36: = Leitung
- 37: = Anschluß
- 38: = Leitung
- 39: = Luftfederbalg
- 40: = Ventilkammer
- 41: = Ventilkammer
- 42: = Ventilkammer
- 43: = Leitung
- 44: = Verriegelungseinrichtung
- 45: = Bolzen
- 46: = Anschlag
- 47: = Anschlag
- 48: = Pfeil
- 49: = erstes Betätigungselement
- 50: = zweites Betätigungselement
- 51: = Betätigungskolben
- 52: = Schieber
- 53: = Doppelventilkörper
- 54: = Rand
- 55: = Kragen
- 56: = Ausgleichskolben
- 57: = Feder
- 58: = Feder
- 59: = Entlüftungsöffnung
- 60: = Schieber
- 61: = Rohr
- 62: = Wechselventil
- 63: = Bremsleitung
- 64: = Kupplungskopf
- 65: = Magnetventil
- 66: = Leitung
- 67: = Entlüftungsöffnung
- 68: = Radsensor
- 69: = Steuereinrichtung
- 70: = elektrische Leitung
- 71: = Antiblockierventil
- 72: = Bremslichtschalter
- 73: = Leitung
- 74: = Rückschlagventil
- 75: = Vorratskammer
- 76: = Leitung

## Patentansprüche

1. Pneumatisches Schaltventil für Anlagen zum Heben und Senken des Fahrzeugaufbaus von luftgefederten Fahrzeugen, mit einer mindestens ein mechanisches Bedienungselement (2, 3; 50) aufweisenden Steuereinrichtung für die Stellungen Heben, Senken, Fahrt und Stop, bei dem in einem Gehäuse (1) für mindestens einen Luftfederkreis ein Einlaßventil (19, 20; 53, 54), ein Auslaßventil (26, 27; 53, 55) und ein Sperrventil (30, 31; 51, 52) für eine von einem Niveauregelventil (35) herangeführte Leitung (34) vorgesehen sind, wobei eine Federanordnung (13; 57, 58) zum Rückführen des Bedienungselements (2, 3; 50) nach dem Loslassen in eine dem geschlossenen Einlaßventil (19, 20; 53, 54) und dem geschlossenen Auslaßventil (26, 27; 53, 55) entsprechende Stellung (Stop) vorgesehen ist, **dadurch gekennzeichnet**, daß im Gehäuse (1) des Schaltventils (2) ein Steuerkolben (9) vorgesehen ist, dessen Steuerkammer (10) bei Fahrt mit Druckluft beaufschlagbar ist und damit das Bedienungselement (2, 3) oder ein weiteres Bedienungselement (49) des Schaltventils (2) automatisch von der Stellung Stop in die Stellung Fahrt überführt und/oder in der Stellung Fahrt belastet.

2. Schaltventil nach Anspruch 1, dadurch gekennzeichnet, daß die Steuerkammer (10) bei Fahrt mit einem Druckluftimpuls kurzzeitig beaufschlagbar ist, und daß das der Stellung Fahrt zugeordnete Bedienungselement (2, 3; 49) ohne Rückführfeder vorgesehen ist und nach einem Druckluftimpuls in der Stellung Fahrt verbleibt.

3. Schaltventil nach Anspruch 1 oder 2, dadurch gekennzeichnet, daß nur ein Bedienungselement (2, 3) für die Stellungen Heben, Senken, Fahrt und Stop vorgesehen ist, welches eine verschiebbare und drehbare Schaltwelle (2) aufweist, wobei die Verschiebung den Stellungen Stop und Fahrt und die Drehung den Stellungen Heben und Senken zugeordnet ist.

4. Schaltventil nach Anspruch 3, dadurch gekennzeichnet, daß eine Verriegelungseinrichtung (44) vorgesehen ist, die in der Stellung Fahrt eine Drehung der Schaltwelle (2) verhindert und nur aus der Stellung Stop heraus ermöglicht.

5. Schaltventil nach Anspruch 4, dadurch gekennzeichnet, daß die Verriegelungseinrichtung (44) einen die Schaltwelle (2) radial durchsetzenden Bolzen (45) aufweist, der in der Stellung Fahrt zwischen Anschlägen (46, 47) gegen Verdrehen gesichert ist.

6. Schaltventil nach einem oder mehreren der Ansprüche 1 bis 5, dadurch gekennzeichnet, daß die Federanordnung (13) eine auf die Schaltwelle (2) einwirkende Schenkelfeder aufweist.

7. Schaltventil nach Anspruch 1 oder 2, dadurch gekennzeichnet, daß ein erstes Bedienungselement (49) für die Stellungen Stop und Fahrt und eines Bedienungselement (50) für die Stellungen Heben und Senken vorgesehen sind, die beide als Schiebeelemente ausgebildet sind.

8. Schaltventil nach Anspruch 7, dadurch gekennzeichnet, daß das zweite Bedienungselement (50) die Federanordnung (57, 58) zum Rückführen nach dem Loslassen aufweist und die Federanordnung zwei Federn (57 und 58) aufweist, die einen Doppelventilkörper (53) einmal gegenüber dem Gehäuse (1) und zum anderen gegenüber dem Bedienungselement abstützen.

9. Schaltventil nach Anspruch 1 oder 2, dadurch gekennzeichnet, daS in der Zuleitung (11) zu der Steuerkammer (10) ein Wechselventil (62) vorgesehen ist, das einen Anschluß für eine Bremsleitung (63) und einen weiteren Anschluß für eine Druckimpulsleitung aufweist.

10. Schaltventil nach Anspruch 9, dadurch gekennzeichnet, daß dem weiteren Anschluß ein Magnetventil (65) vorgeschaltet ist, welches einen Auslaß (67) aufweist und über eine Verbindungsleitung (66) an einen Druckluftvorrat angeschlossen ist.

## Claims

1. A pneumatic switching valve for body lifting and lowering systems for vehicles with pneumatic suspension, comprising a control unit for the positions LIFTING, LOWERING, DRIVE and STOP having at least one mechanical operating element (2, 3; 50), and an inlet valve (19, 20; 53, 54), an outlet valve (26, 27; 53, 55), and a controlled check valve (30, 31; 51, 52) for a conduit (34) connected with a levelling valve (35), all arranged in a housing (1) and assigned to at least one pneumatic suspension circuit, and a spring arrangement (13; 57, 58) for restoring the operating element (2, 3; 50) into a position (STOP) corresponding to the closed inlet valve (19, 20; 53, 54) and the closed outlet valve (26, 27; 53, 55) after letting go of the operating element, **wherein** a control piston (9) is provided in the housing (1) of the switching valve (2), the control chamber (10) of which can be loaded with pressurized air during drive situation and thus automatically shifts the operating element (2, 3) or a further operating element (49) of the switching valve (2) from the position STOP into the position DRIVE and/or loads the operating element within the position DRIVE.

2. The pneumatic switching valve of claim 1, **wherein** the control chamber (10) can be loaded for a short period during drive situation with pulsed air under pressure, and the operating element (2, 3; 49) assigned to the position DRIVE is provided without restoring spring and remains in the position DRIVE after a pulses air under pressure.

3. The pneumatic switching valve of claim 1 or 2, **wherein** there is provided only one operating element (2, 3) for the positions LIFTING, LOWERING, DRIVE and STOP comprising a shiftable and rotatable switching shaft (2), the shifting being assigned to the positions STOP and DRIVE and the rotation being assigned to the positions LIFTING and LOWERING.

4. The pneumatic switching valve of claim 3, **wherein** a locking device (44) is provided preventing rotation in the position DRIVE and allowing rotation only from the position STOP.

5. The pneumatic switching valve of claim 4, **wherein** the locking device (44) comprises a stud (45) extending radially through the switching shaft (2) and in the position DRIVE being secured between stops (46, 47) so that it cannot rotate.

6. The pneumatic switching valve of one or more of the claims 1 to 5, **wherein** the spring arrangement (13) comprises a leg spring contacting the switching shaft (2).

7. The pneumatic switching valve of claim 1 or 2, **wherein** a first operating element (49) for the positions STOP and DRIVE and a second operating element (50) for the positions LIFTING and LOWERING are provided, both of the elements being sliding spool elements.

8. The pneumatic switching valve of claim 7, **wherein** the second operating element (50) comprises the spring arrangement (57, 58) for restoring after letting go, and the spring arrangement has two springs (57 and 58) supporting a double valve body (53) with respect to the housing (1) and with respect to the operating element.

9. The pneumatic switching valve of claim 1 or 2, **wherein** a changing valve (62) is provided in the conduit (11) to the control chamber (10) which has a connection for a brake line (63) and a further connection for a conduit with a pulsed air under pressure.

10. The pneumatic switching valve of claim 9, **wherein** a solenoid valve (65) is connected with the further connection, the solenoid valve comprising an outlet (67) and being connected to a reservoir of air under pressure via a conduit (66).

## Revendications

1. Soupape de commutation pneumatique pour dispositifs de relèvement et d'abaissement de la carrosserie de véhicules à suspension pneumatique, avec un dispositif de commande, comportant au moins un élément de commande (2, 3 ; 50) mécanique, pour les positions relèvement, abaissement, marche et arrêt, dans laquelle sont prévues, dans un boîtier (1) pour au moins un circuit pneumatique, une soupape d'admission (19, 20 ; 53, 54), une soupape d'échappement (26, 27 ; 53, 55) et une soupape d'arrêt (30, 31 ; 51, 52) pour une conduite (34) reliée à une soupape de régulation de niveau (35), un dispositif à ressorts (13 ; 57, 58) étant prévu pour le rappel de l'élément de commande (2, 3 ; 50) après relâchement dans une position (arrêt) correspondant à la soupape d'admission (19, 20 ; 53, 54) fermée et à la soupape d'échappement (26, 27 ; 53, 55) fermée, caractérisée en ce que dans le boîtier (1) de la soupape de commutation (2) est prévu un piston de commande (9), dont la chambre de commande (10) est alimentée en air comprimé, pendant la marche et fait ainsi passer automatiquement l'élément de commande (2, 3) ou un autre élément de commande (49) de la soupape de commutation (2), de la position arrêt dans la position marche et/ou les sollicite dans la position marche.

2. Soupape de commutation selon la revendication 1, caractérisée en ce que la chambre de commande (10) peut brièvement recevoir une impulsion d'air comprimé, pendant la marche, et en ce que l'élément de commande (2, 3 ; 49), associé à la position marche, est prévu sans ressort de rappel et reste dans la position marche, après une impulsion d'air comprimé.

3. Soupape de commutation selon la revendication 1 ou 2, caractérisée en ce qu'il est prévu seulement un élément de commande (2, 3) pour les positions relèvement, abaissement, marche et arrêt, qui comporte un arbre de commutation (2) pouvant coulisser et tourner, le coulissement étant associé aux positions arrêt et marche et la rotation aux positions relèvement et abaissement.

4. Soupape de commutation selon la revendication 3, caractérisée en ce qu'il est prévu un dispositif de verrouillage (44), qui, dans la position marche, empêche une rotation de l'arbre de commutation (2) et ne l'autorise qu'à partir de la position arrêt.

5. Soupape de commutation selon la revendication 4, caractérisée en ce que le dispositif de verrouillage (44) comporte un axe (45), traversant radialement l'arbre de commutation (2), qui, dans la position marche, est bloqué contre une rotation entre des butées (46, 47).

6. Soupape de commutation selon une ou plusieurs des revendications 1 à 5, caractérisée en ce que le dispositif àressorts (13) comporte un ressort à branches agissant sur l'arbre de commutation (2).

7. Soupape de commutation selon la revendication 1 ou 2, caracterisée en ce qu'un premier élément de commande (49) est prévu pour les positions arrêt et marche et un élément de commande (50) pour les positions relèvement et abaissement, tous deux étant conçus en tant qu'éléments coulissants.

8. Soupape de commutation selon la revendication 7, caractérisée en ce que le deuxième élément de commande (50) comporte le dispositif à ressorts (57, 58), pour le rappel après le relâchement et le dispositif à ressorts comporte deux ressorts (57 et 58), qui soutiennent un double corps de soupape (53), d'une part par rapport au boîtier (1) et d'autre part par rapport à l'élément de commande.

9. Soupape de commutation selon la revendication 1 ou 2, caractérisée en ce que dans la conduite d'arrivée (11) à la chambre de commande (10), est prévue une soupape à deux voies (62), qui comporte un raccord pour une conduite de freinage (63) et un autre raccord pour une conduite d'impulsions de pression.

10. Soupape de commutation selon la revendication 9, caractérisée en ce qu'en amont de l'autre raccord est montée une soupape magnétique (65), qui présente une sortie (67) et qui est raccordée à un réservoir d'air comprimé, par une conduite de liaison (66).
